Europäisches Patentamt

European Patent Office

Office européen des brevets

(11) Publication number: **0 209 212**
**B1**

# EUROPEAN PATENT SPECIFICATION

(45) Date of publication of patent specification: **23.11.88**

(51) Int. Cl.⁴: **B 65 G 67/60**

(21) Application number: **86302279.4**

(22) Date of filing: **26.03.86**

(54) Unloader, particularly for ships.

(30) Priority: **27.03.85 JP 62599/85**
**05.06.85 JP 121979/85**
**18.10.85 JP 233956/85**

(43) Date of publication of application:
**21.01.87 Bulletin 87/04**

(45) Publication of the grant of the patent:
**23.11.88 Bulletin 88/47**

(84) Designated Contracting States:
**DE FR**

(56) References cited:
**EP-B-0 007 892**
**AT-B- 3 840**

(73) Proprietor: **KAWASAKI JUKOGYO KABUSHIKI KAISHA**
**1-1 Higashikawasaki-cho 3-chome**
**Chuo-ku Kobe-shi Hyogo-ken (JP)**

(72) Inventor: **Nozaki, Yasuo**
**757-204, Honjo, Harima-cho**
**Kako-gun Hyogo Prefecture 675-01 (JP)**
Inventor: **Torii, Tomohiro**
**7-102, Kaminotani 7 Chome**
**Suma-ku Kobe 654 (JP)**
Inventor: **Iwata, Hiroyoshi**
**23-10, Kitayamadai 2 Chome**
**Nishi-ku Kobe 673-02 (JP)**

(74) Representative: **Hayward, Denis Edward Peter et al**
**Lloyd Wise, Tregear & Co. Norman House**
**105-109 Strand**
**London WC2R 0AE (GB)**

Courier Press, Leamington Spa, England.

## Description

The present invention relates to an unloader or apparatus for excavating or scooping and elevating material, particularly in a hold of a ship.

An unloader of this type is shown in Japanese patent pub. 59-48225 published on Nov. 24, 1984 (claiming priority of Swedish appln. 7807715-3 filed on July 11, 1978, see also EP—A—7892).

This prior art unloader includes a lateral conveyor extending between a pier and a ship, a generally vertical conveyor downwardly extending from the end of the lateral conveyor adjacent the ship, a supply conveyor obliquely and downwardly extending from the vertical conveyor adjacent its bottom, and a collector connected to the supply conveyor and extending perpendicularly to it.

The prior art unloader cannot sufficiently collect material when the collector moves longitudinally of itself. Also, this unloader is not suitable to excavate only an upper portion of material, because the collector is forced to contact a floor of the ship by gravity.

It is a general object of this invention to provide an unloader for effectively excavating both thick and thin layers of material in various directions along a floor of a ship.

An unloader according to the invention includes:

screw type excavating and conveying means having an axis extending laterally;

rake type excavating and conveying means connected at one end to said screw type means, and extending perpendicularly to said axis;

elevating means extending at least in part substantially vertically to pivotably support said rake type means adjacent the lower end of said elevating means, and elevate material from said rake type means; and

support means supporting said elevating means and adapted to rotate it on its vertical axis together with said rake type and screw type means, and move it substantially vertically and horizontally.

This unloader is characterized by:

rotary cutters provided on said screw type means at both ends of said screw type means; and

holding means connected to resiliently hold said rake type means with respect to said elevating means at a substantially constant angle to said axis of the elevating means.

Preferred embodiments of the invention are explained below with reference to the accompanying drawings, wherein:

Fig. 1 is a side elevation of an unloader according to the invention;

Fig. 2 is a top plan of the unloader of Fig. 1;

Fig. 3 is a side elevation of part of Fig. 1;

Fig. 4 is an enlarged sectional view of part of the unloader;

Fig. 5 is an enlarged schematic view in perspective of part of the unloader;

Fig. 6 is an enlarged schematic view in cross section of part of the unloader;

Fig. 7 is a fragmentary view in perspective of another form of part of the unloader;

Fig. 8 is a side elevation partially in section showing another form of part of the unloader;

Fig. 9 is a front elevation of the construction shown in Fig. 8;

Fig. 10 is a sectional view taken on the line X—X of Fig. 8;

Fig. 11 is an exploded perspective view of part of the construction shown in Figs. 8—10;

Fig. 12 is an exploded perspective view of part of the construction shown in Figs. 8—9;

Fig. 13 is a side elevation of another form of unloader according to the invention;

Fig. 14 is a top plan of the unloader of Fig. 13;

Fig. 15 is an end elevation of the unloader of Figs. 13—14;

Fig. 16 is an enlarged cross-sectional view of the circled portion XVI in Fig. 13;

Fig. 17 is a diagrammatic view showing the movement of a bucket elevator of the unloader of Figs. 13—16;

Fig. 18 is a perspective view of part of this unloader;

Fig. 19 is a schematic view in perspective of part of this unloader;

Fig. 20 is a schematic top plan of the ship shown in Figs. 13 and 15;

Fig. 21 is a schematic top plan showing still another form of unloader according to the invention;

Fig. 22 is a side view showing a further modified form of elevator;

Fig. 23 is a fragmentary view as viewed from the left in Fig. 22;

Fig. 24 is a schematic side view showing the conveyor in the elevator;

Fig. 25 is an enlarged perspective view of the portion circled in Fig. 24;

Fig. 26 is an enlarged view in cross section taken along line E—E of Fig. 24.

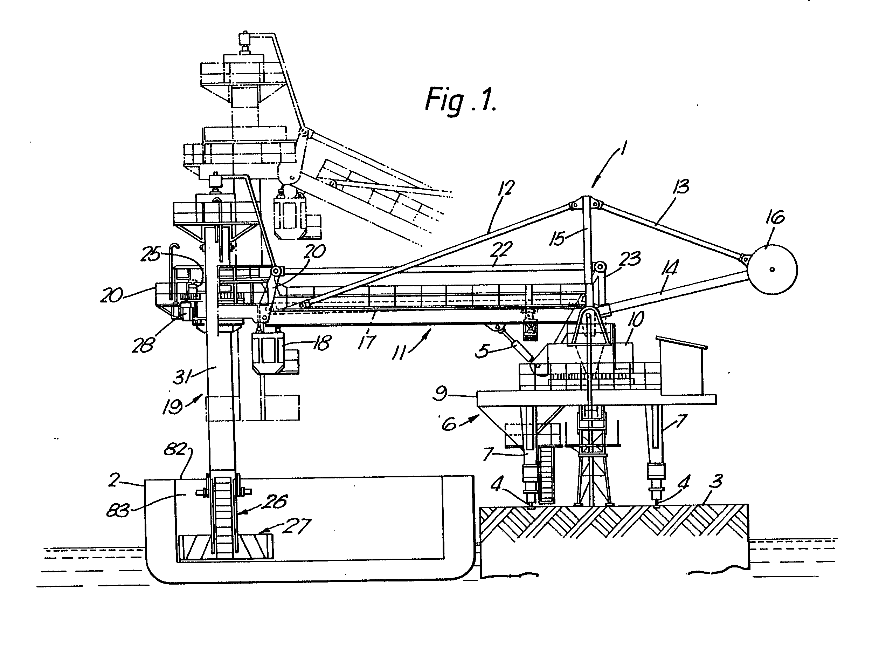

With reference to Figs. 1—2, an unloader 1 stands on a pier 3, at which a ship 2 moors. Longitudinally on the pier 3 extend a pair of parallel rails 4.

The unloader 1 includes a gate-like framework or gantry 6, which is movable along the rails 4 in the directions A1—A2. The framework 6 has legs 7 riding the rails 4, and girders 9 carried on the legs. Mounted on the girders 9 is a rotary support 10, which can be rotated on a vertical axis by means not shown. The support 10 supports one end of a boom 11 pivotably in a vertical plane.

The boom 11 forms a link work together with links 12—14. Connected to the link work are a support member 15 and a weight 16. The boom 11 has a belt conveyor 17 extending on and along it, and pivotably carries an operating room 18 adjacent the other or outer end.

The boom 11 also pivotably carries a generally annular head frame 20 on the outer end. The frame 20 is connected to one end of a connecting rod 22, which extends above and in parallel to the boom 11. The rod 22 is connected at the other end to a connecting rod 23 fixed to the rotary support 10. Connected between the support 10 and the boom 11 is a hydraulic cylinder 5 to swing the boom in a vertical plane.

The link work allows the axis of the head frame 20 to be always vertical as the boom 11 swings.

The frame 20 rotatably supports a bucket elevator 19 extending vertically through it. The elevator 19 can be rotated on the vertical axis of the frame 20 by a drive 28, which is mounted on the frame 20.

The frame 20 also rotatably supports an annular table 24 around the elevator 19. The table 24 can be rotated coaxially with the elevator 19 by a drive 25, which is mounted on the frame 20.

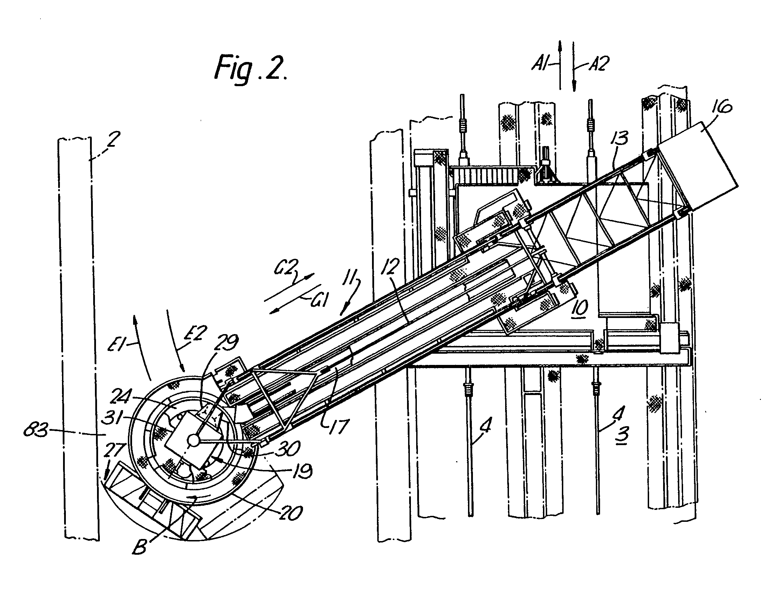

With reference to Figs. 1—3, the elevator 19 is surrounded in a casing 31, which is generally square in cross section. The casing 31 has an outlet duct 29 mounted at the top thereof to discharge material from the elevator 19 onto the rotary table 24. The material is then carried on the table 24 in the direction B (Fig. 2), and guided by a guide blade 30 onto the belt conveyor 17.

With reference to Figs. 1, 3 and 4, the elevator 19 supports adjacent the lower end one end of rake type excavating and conveying means 26, which extends generally downwardly. The rake means 26 supports on the other end screw type excavating and conveying means 27, which has a horizontal axis extending perpendicularly to the rake means 26.

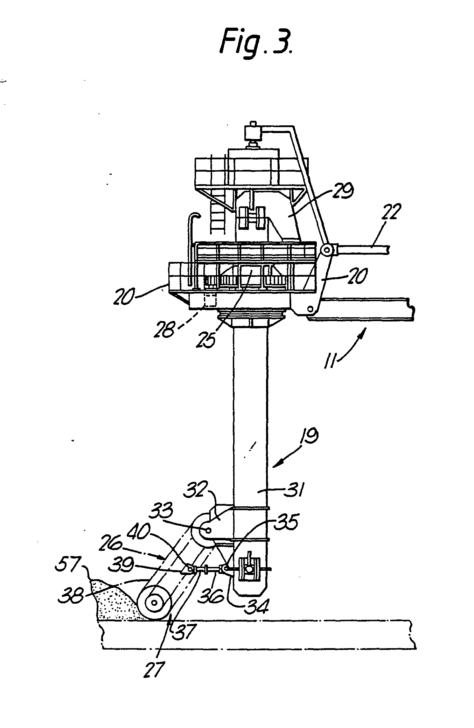

As shown in Figs. 3—4, the elevator casing 31 has a pair of brackets 32 secured to it adjacent its lower end. The rake means 26 is connected at one end to the brackets 32 by a horizontal pin 33 pivotably in a vertical plane.

Below the brackets 32, another pair of brackets 34 are secured to the casing 31, and a hydraulic cylinder 36 is connected to each bracket 34 by a pin 35. The cylinder 36 has a rod 37 connected to a bracket 39 on one side wall of the casing 38 of the rake means 26 by a pin 40. The cylinder 36 is adapted to maintain a predetermined angle between the elevator 19 and the rake means 26, and acts as a buffer to absorb impulses which may act on the rake means 26 or screw means 27.

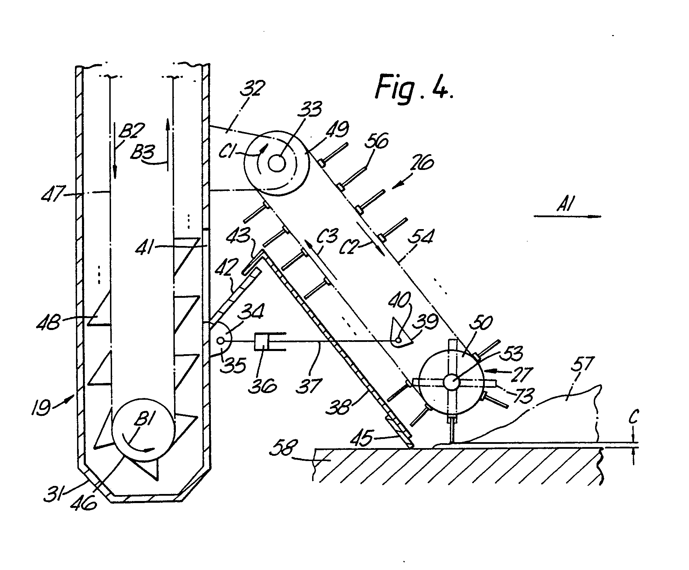

With reference to Fig. 4, the elevator casing 31 has an opening 41 formed therethrough shortly below the upper brackets 32 to pass material from the rake means 26 into the elevator 19. The casing 31 also has a guide plate 42 extending upwardly and outwardly from the lower end of the opening 41.

The rake means casing 38 has a guide plate 43 extending from its upper end downwardly and outwardly over the guide plate 42. The casing 38 also has a scraping plate 45 pinned to its lower end.

The elevator casing 31 houses a conveyor pulley 46 journalled on a horizontal axis at the bottom thereof, and a conveyor belt 47 wound around the pulley 46. The belt 47 has a number of buckets 48 secured thereto at regular intervals. The pulley 46 is rotated in the direction B1, and the buckets 48 are moved in the directions B2—B3 to lift the material thrown through the opening 41.

With reference to Figs. 4—5, the rake means casing 38 houses sprocket wheels 49—52. The upper wheels 49 and 51 are rotated in common by a horizontal drive shaft 33 in the direction C1, while the lower wheels 50 and 52 are interconnected by a horizontal shaft 53. Wound between and around the wheels 49—50 on one side is an endless chain 54, and wound between and around the wheels 51—52 on the other side is an endless chain 55.

As shown in Fig. 4, the chains 54—55 have a number of outwardly projecting rakes 56 at a horizontal interval between the chains. The chains 54—55 move in the directions C2—C3 to rake up material 57 in front of the rake means 26, and convey it in the direction C3.

The rake means 26 is designed so that, when the scraper 45 contacts a floor 58 of the ship, the outer end of the rake 56 at the lowest position is spaced from the floor 58 by a clearance c.

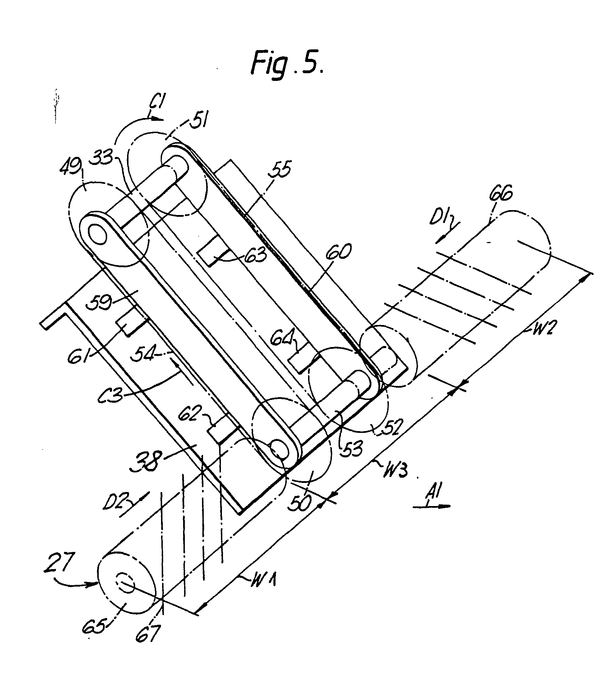

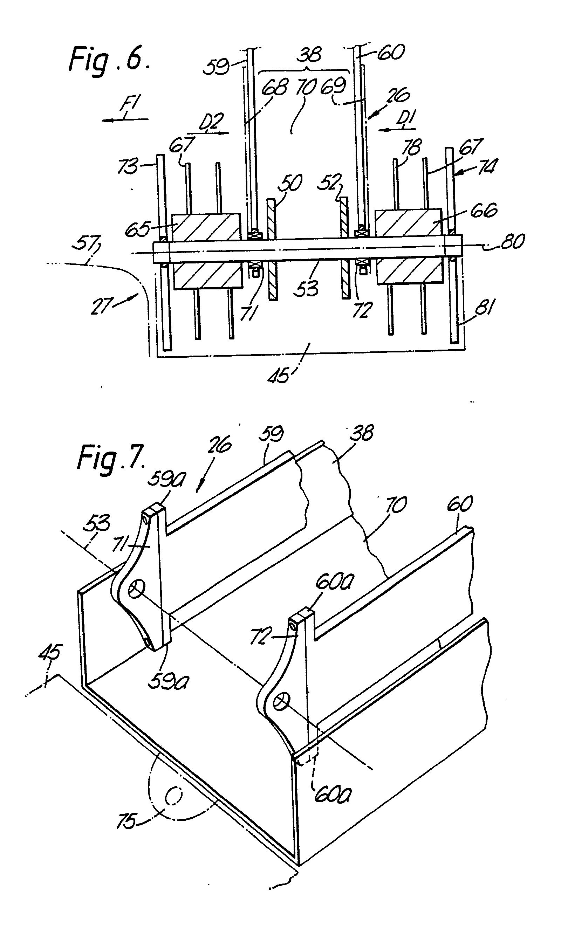

As shown in Figs. 5 and 6, the shafts 33 and 53 are journalled in a pair of support plates 59—60, which are fixed to the casing 38 by supports 61—64 outside the wheels 49—52 axially of the shafts.

The lower shaft 53 further extends outside the support plates 59—60, and a pair of drums 65—66 are fixed coaxially to it outside the casing 38. Each drum 65, 66 has a plurality of spiral blades 67.

With reference to Fig. 6, the rake means casing 38 includes side plates 68—69 and a bottom plate 70, within which the support plates 59—60 are located. The plates 59—60 have bearings 71—72 fixed to their lower ends, respectively, to journal the shaft 53.

Secured to the shaft 53 are a pair of rotary side cutters 73—74 axially outside the drums 65—66. Each cutter 73, 74 has four blades extending radially of the shaft 53 and spaced from each other at a right angle. When the screw means 27 is moved in the direction to excavate the material 57 by the cutter 73, 74, e.g., axially of the screw means, the excavated material is moved toward the rake means 26 by the spiral blades 67.

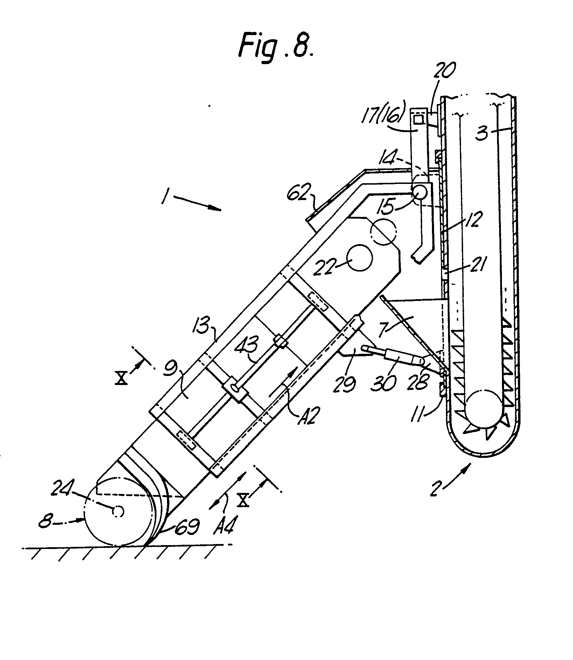

Fig. 7 shows a modification of rake means 26, which has a pair of supports 59—60 mounted within a casing 38. Each support 59, 60 has a pair of projections 59a, 60a, which extend at its lower end perpendicularly to its length. Bearings 71—72 are bolted to the projections 59a—60a, respectively.

The bottom wall 70 has a bracket 75 formed on its lower end, to which a scraper 45 is pinned. This enables the scraper 45 to follow the rolling and pitching of the ship, so that no unnecessary forces may act on the scraper 45 contacting the floor of the ship.

In operation, back to Fig. 1, the unloader 1 changes from the position shown in chain lines to that shown in solid lines by means of the link work 11—14, with the bucket elevator 19 maintained to vertically extend. This lowers the screw means 27 onto the material in a hold 83 under a hatch 82 of the ship 2.

With reference to Figs. 4—5, the elevator 19 is moved in the direction A1 as the framework 6 moves along the rails 4. At this time, the materials 57 in both side sections W1 and W2 (Fig. 5) in front of the screw means 27 are excavated by the rotating blades 67.

With reference to Fig. 6, the excavated and fragmented materials 57 are forced by the spiral blades 67 in the inward directions D1 and D2 toward the rake means 26.

The material 57 in a central section W3 (Fig. 5) in front of the rake means 26 is excavated by the rakes 56 (Fig. 4), and conveyed by them along the casing 38 in the direction C3 together with the materials from the screw means 27. The material 57 then falls along the guides 43—42 and through the opening 41 into the buckets 48.

Back to Figs. 1—3, the material is lifted by the bucket elevator 19, and then falls through the duct 29 onto the rotary table 24. The material is then guided by the blade 30 onto the conveyor 17, which conveys it toward the pier 3.

The rotary support 10 can turn the boom 11 etc. in the directions E1—E2 (Fig. 2). The drive 28 can rotate the elevator 19 on the vertical axis with the rake means 26 and the screw means 27.

With reference to Fig. 6, when the screw means 27 moves in the direction F1, the rotating side cutter 73 excavates the material in front of itself. The blade 67 moves the excavated and fragmented material in the direction D2.

In Fig. 2, the screw means 27 can be moved in the directions G1—G2 without rotating on the axis of the elevator 19, by selectively combining the movements of the elevator 19 in the directions A1—A2 and E1—E2 and the rotation of the elevator on its own axis. Also, the screw means 27 may be rotated around the elevator 19 while the boom 11 is turned in the direction E1, E2.

The elevator casing 31 and the rake means casing 38 are connected by the hydraulic cylinder 36 at a predetermined angle between the casings. As a result, as the scraper 45 scrapes the floor 58 (Fig. 4), impulses on the scraper can be absorbed. It is also possible to excavate only an upper portion of the material 57 with the scraper 45 spaced from the floor 58. Thus, it is possible to excavate both thick and thin layers of material.

The unloader 1 is shown as riding the rails 4, but may instead be mounted on a gantry extending over a hold or a pool type storage and being movable along it.

Figs. 8—12 show a partial modification of the unloader 1. The unloader includes a vertically extending bucket elevator 2, which is similar to the elevator 19 in the previous embodiment. The elevator 2 has a housing 3, which is provided with a chute 7 thereon.

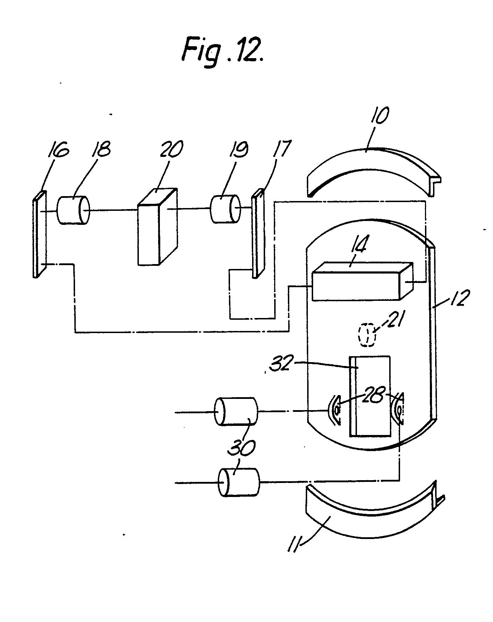

The housing 3 has a pair of stop members 10—11 secured to its outer surface on the upper and lower sides of the chute 7, respectively. As shown in Fig. 12, the stops 10—11 extend generally laterally and form sections of a circle. The stops 10—11 are L-shaped in radial cross section to hold a support plate 12 therebetween.

The plate 12 has opposite arcuate edges, which form sections of a circle, in slidable engagement with the stops 10—11. The plate 12 also has a central pin 21, which rotatably engages a hole (Fig. 8) in the housing 3.

The plate 12 is formed with an opening 32 below the pin 21, through which the chute 7 loosely extends. The opening 32 is so large that the plate 12 can turn around the pin 21 relative to the housing 3 within a limited range. The plate 12 further has a bracket 14 secured thereto above the pin 21, and a pair of brackets 28 formed thereon below the pin.

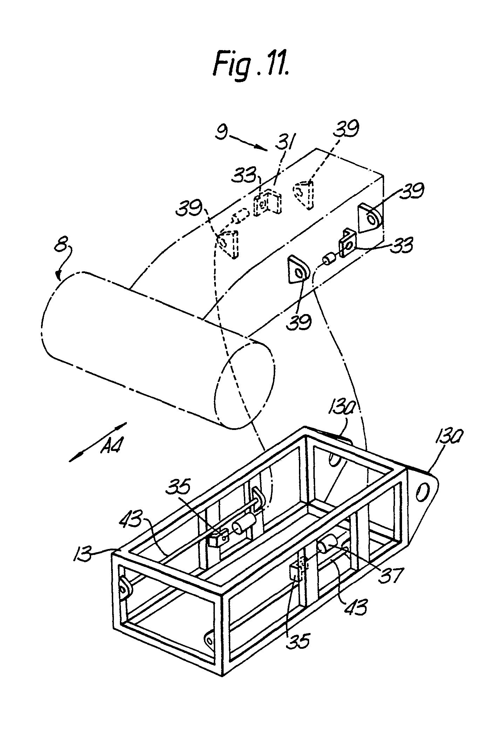

Rake means 9 is surrounded by a guide frame 13. The frame 13 has at one end a pair of hinge members 13a (Fig. 11), which are connected to both sides of the bracket 14 by a horizontal pin 15.

The plate 12 is provided with a cover 62 (Fig. 8) over the hinged end portion of the frame 13, in order to prevent dispersion of the material transferring from the rake means 9 to the chute 7.

The pin 15 is secured at both ends to the lower ends of a pair of vertically extending support members 16—17, which are connected at the upper ends to the piston rods of a pair of hydraulic cylinders 18—19, respectively. The cylinders extend in parallel to the pin 15, and are secured at the inner ends to a bracket 20 on the housing 3.

The cylinders 18—19 are adapted to act as buffers to absorb displacement of the supports 16—17, which is parallel to the cylinders. When the support plate 12 angularly moves around the pin 21, the buffers 18—19 prevent great forces from acting on the housing 3 etc.

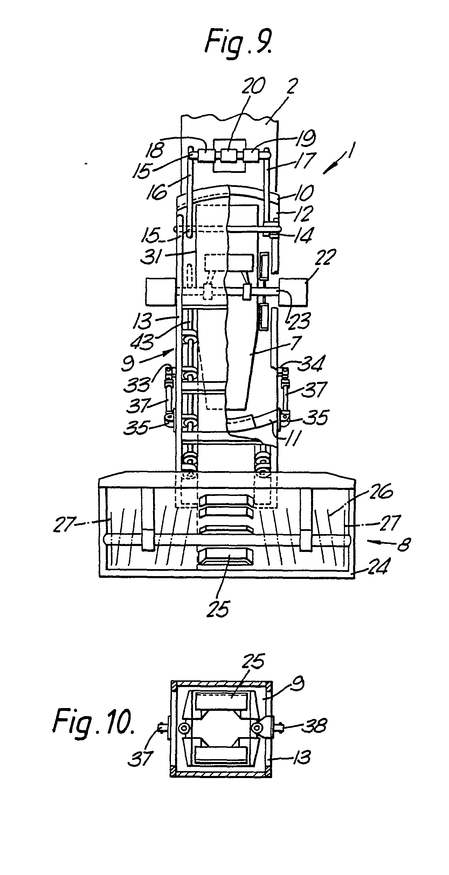

The rake means 9 has a drive 22 mounted thereon adjacent the hinged end to rotate a horizontal drive shaft 23 (Fig. 9), which is journalled in the rake means 9. The shaft 23 drives a chain (not shown) wound between it and a shaft 24 of screw means 8, which is mounted on the other end of the rake means 9 and extends perpendicularly thereto. The chain moves rakes 25 (Figs. 9—10) on the chain and rotates screws 26 and side cutters 27 of the screw means 8.

Connected between each bracket 28 on the support plate 12 and a bracket 29 on the frame 13 is a hydraulic jack 30 as a buffer, so that the rake means 9 extends downwardly and away from the casing 3.

The rake means 9 has a pair of brackets 39 (Fig. 11) aligned longitudinally on each of its sides. The frame 13 has a guide rod 43 extending longitudinally on each of its sides, and loosely through the brackets 39 on the same side. This enables the frame 13 to support the rake means 9 telescopically in the direction A4.

The rake means 9 has another pair of brackets 33 on both of its sides. The frame 13 has a pair of brackets 35 on both of its sides. The brackets 33 and 35 on each side of the rake means 9 are interconnected by a hydraulic cylinder 37 as a buffer, which may be a double acting cylinder.

The buffers 37 act to absorb reciprocating impulses of the rake means 9 relative to the frame 13. This prevents great forces from acting on the elevator casing 3 etc.

In operation, as the screw means 8 moves in contact with a ship's floor, which includes oblique and non-flat surfaces, the former is angularly displaced with the rake means 9, frame 13 and plate 12 around the pin 21. This enables the screw means 8 to follow various surfaces of the floor.

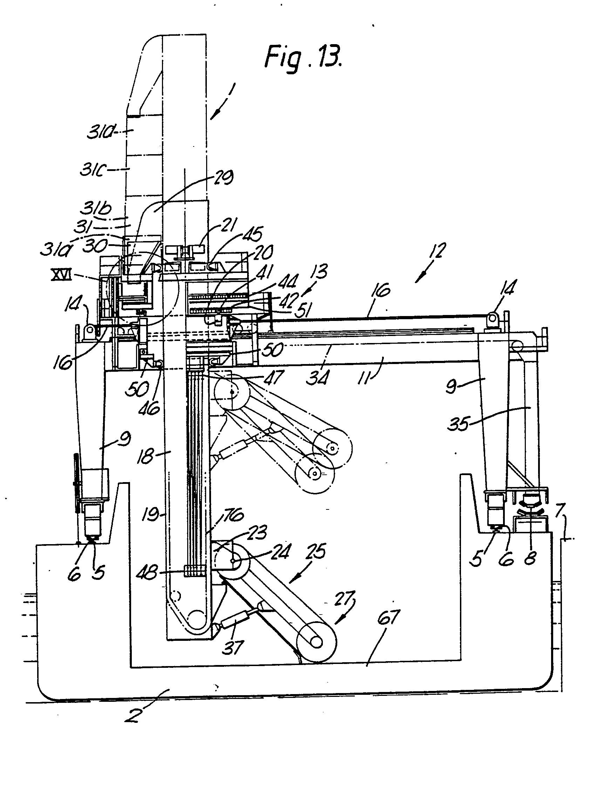

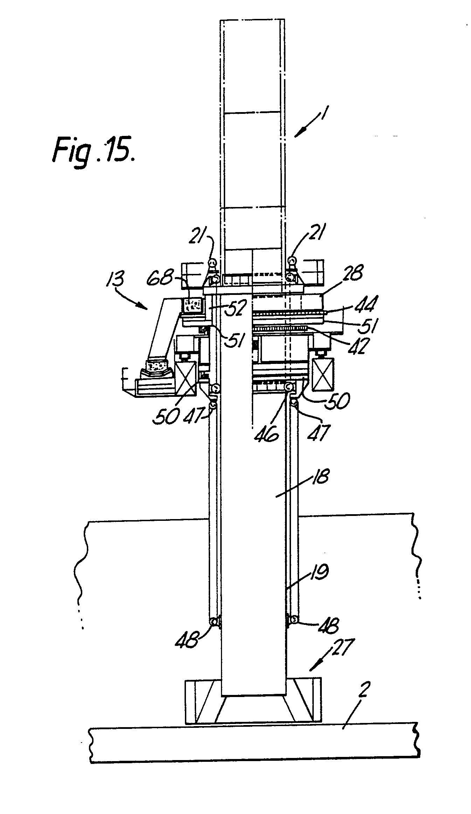

In Figs. 13—15, another form of unloader 1 is shown as mounted on a ship 2, which has a pair of parallel rails 5 extending longitudinally on both of its sides. The ship 2 also has a belt conveyor 8 extending in parallel to the rails 5 on the side adjacent a pier 7.

The unloader 1 includes a gantry 12 having a pair of spaced parallel girders or cross beams 11, which are fixed together by both end members 15 and bridge legs 9 between the rails 5. The legs 9 have wheels 6 and drive means (not shown) to move the unloader 1 along the rails 5.

Secured to the end members 15 are a pair of winches 14 to wind wires 16. The girders 12 are bridged by a trolley 13, which is movable along them. The wires 16 connect the trolley 13 respectively to the winches 14.

The trolley 13 surrounds a bucket elevator 18, which substantially vertically extends between the girders 11. The elevator 18 includes a conveyor belt 76 having buckets (not shown) thereon and surrounded by a housing 19, which is generally rectangular in cross section.

Formed on the housing 19 adjacent its bottom are a pair of brackets 23, which support rake means 25 pivotably at a drive shaft 24. The rake means 25 carries a screw means 27 on the lower end, and is supported adjacent its middle against the elevator 18 through a buffer 37. The rake and screw means 25 and 27 are similar to those in the previous embodiments.

With reference to Figs. 13, 15 and 16, an annular support 51 is fixed coaxially to the lower end of a sleeve 52, and the parts 51—52 coaxially and loosely surround the elevator casing 19.

The sleeve 52 supports a pair of winches 21 and a set of upper rollers 45. The annular support 51 is fixed to an annulus 50 which supports a set of lower rollers 46. The rollers 45—46 surround and engage all the four side walls of the casing 19, so that the elevator 18 can vertically move but cannot rotate relative to the parts 50—52.

The annulus 50 also supports a rotary table 28 on its upper side through roller bearings 53 around the sleeve 52. Fixed coaxially to the table 28 is a gear 44 in engagement with a pinion 43 of a drive 32, which is mounted on the annulus 51 to rotate the table 28.

The annulus 51 is journalled in a bearing 77, which includes an outer race 78 fixed to the lower side of the annulus 51, an inner race 79 fixed to the trolley 13, and balls 80 between the races. The bearing 77 bears both thrust and radial loads.

Mounted on the trolley 13 is a drive 20 having a pinion 41, which engages a gear 42 fixed to the outer race 78 to rotate the elevator 18 on its vertical axis relative to the trolley 13.

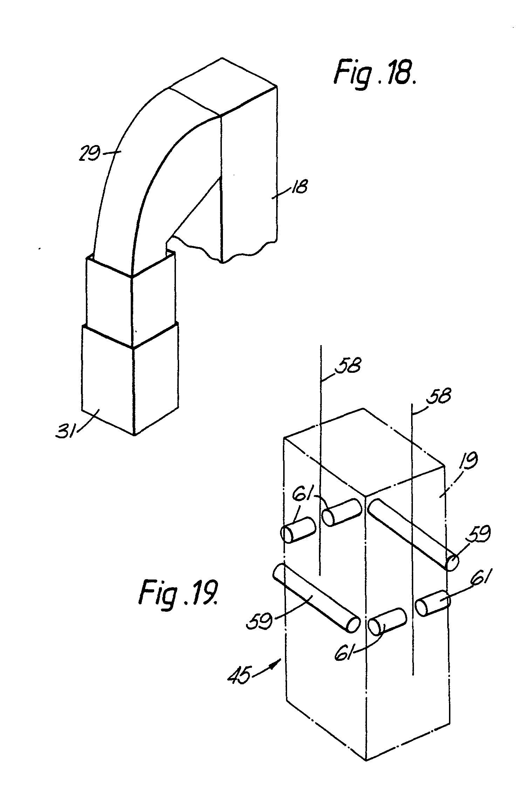

Mounted on the elevator casing 19 adjacent its top is a duct 29 (Figs. 13—14), which curves outwardly and downwardly. The sleeve 52 supports a chute 30 (Fig. 13) above the table 28. The duct 29 and the chute 30 are interconnected by a vertical chute cover 31 (Figs. 13, 18), which includes a plurality of telescopically coupled sleeves 31a—d. The sleeve 31d of the smallest diameter is connected to the duct 29. As the elevator 18 vertically moves with the duct 29, the chute cover 31 can telescope.

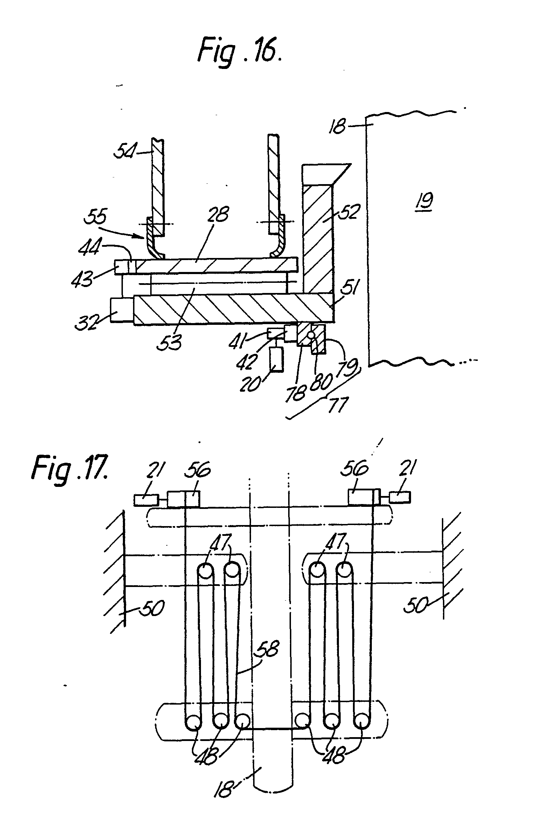

Fixed to the lower end of the chute 30 is a guide member 54 (Fig. 16). Fixed to the lower end of the member 54 is a rubber guide member 55 in flexible engagement with the rotary table 28. These guide members keep the material from dispersing or falling from the table 28.

As shown in Fig. 17, each winch 21 mounted on the sleeve 52 has an output shaft, to which a drum 56 is fixed. The annulus 50 supports a row of pulleys 47, and the casing 19 supports a row of pulleys 48. A wire 58 is wound around the drums 56 and pulleys 47—48, so as to suspend the elevator 18 and vertically move it by actuating the winches 21.

Even if the winding speeds of the winches 21 differ, the single wire 58 allows equal loads to act on all pulleys 47—48, thereby vertically moving the elevator 18 without deflection.

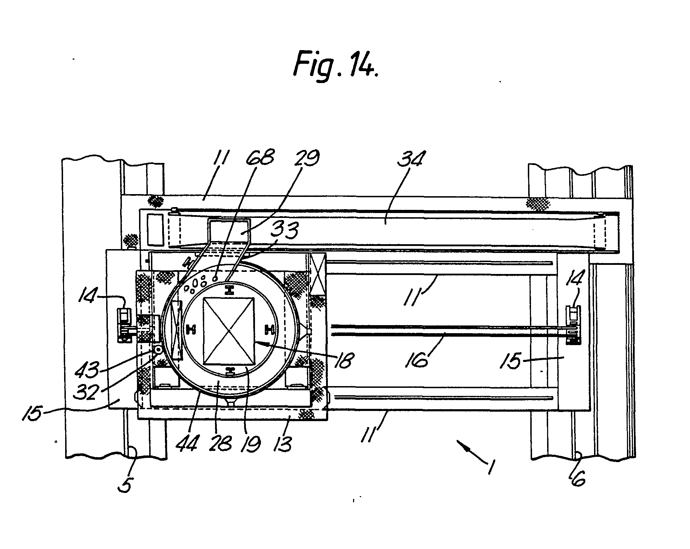

The material carried by the rotating table 28 is then guided by a blade 33 (Fig. 14) onto a belt conveyor 34, which extends along one of the girders 11. The material is then conveyed toward the pier 7 and drops through a chute 35 (Fig. 13) onto the conveyor 8.

As shown in Fig. 19, the upper guide rollers 45 include a pair of parallel rollers 59 engaging opposite sides of the elevator casing 19, and two pairs of parallel rollers 61 engaging the other opposite sides of the casing 19 perpendicularly to the rollers 59. The rollers 61 of each pair are axially spaced for the wire 58 to extend vertically.

In Fig. 13, the trolley 13 is moved to the right, for example, by the right winch 14 winding up the wire 16. At this time, the left winch 14 is operated to produce a counter torque to tense the wire 16 between this winch and the trolley 13, for the following reason:

When the trolley 13 is pulled to the right in Fig. 13, if the left wire 16 loosens, and the ship 2 rolls clockwise, the trolley 13 may move by gravity to the right faster than would be pulled by the right winch 14.

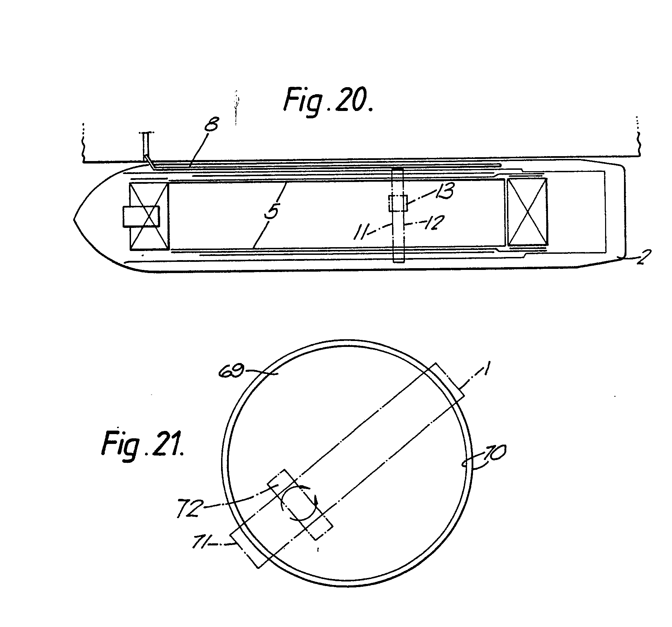

With reference to Figs. 13 and 20, the gantry 12 can move along the rails 5, and the trolley 13 can move along the girders 11. These movements can be combined to unload material at a desired location in a hold 67. Also, the bucket elevator 18 can vertically move, so as to unload both thick and thin layers of material in the hold 67.

It should be possible to reciprocate the elevator 18 by a rack and pinion combination, instead of the winches 21.

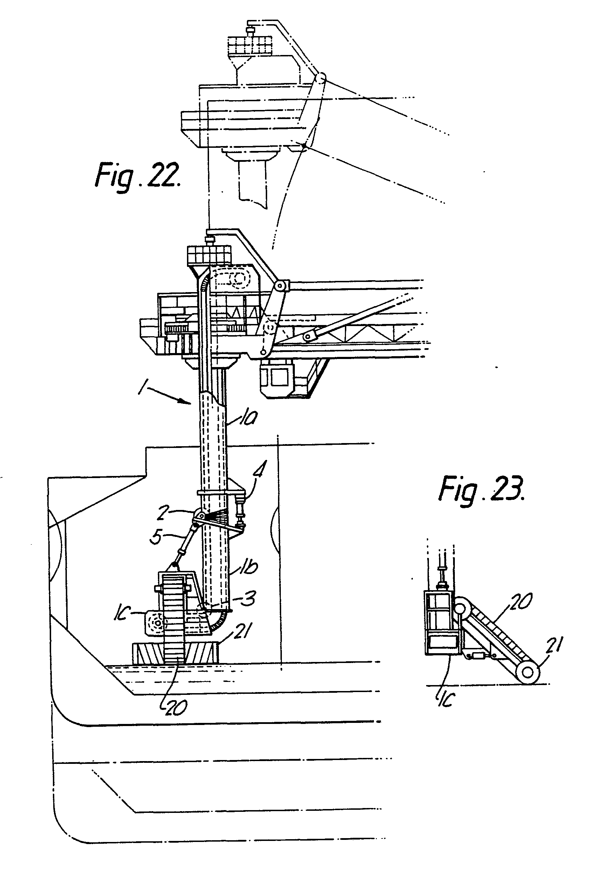

In Fig. 21, a pair of annular rails 70 are fixed around a cylindrical reservoir 69. An unloader 1, similar to that in Figs. 13—15, includes a gantry 71 extending diametrically over the hold 69, and adapted to angularly move on the rails 70. The gantry 71 carries a trolley 72, which is movable along it.

In each of the embodiments, the gantry could be replaced by a girder without legs.

With reference to Fig. 22, a generally vertical elevator 1 includes a housing divided into three parts 1a, 1b and 1c. The upper and middle parts 1a—1b are hinged together on one side, and the middle and lower parts 1b—1c are hinged together on the same side, respectively by horizontal hinge pins 2—3. The lower part 1c supports a rake means 20, which supports a screw means 21.

Connected between the upper and middle parts 1a—1b is a hydraulic jack 4 to pivotally move the middle part 1b around the hinge pin 2. Connected between the middle and lower parts 1b—1c is another hydraulic jack 5, which is controlled to keep the lower part 1c always extending horizontally even if the middle part 1b pivots around the pin 3.

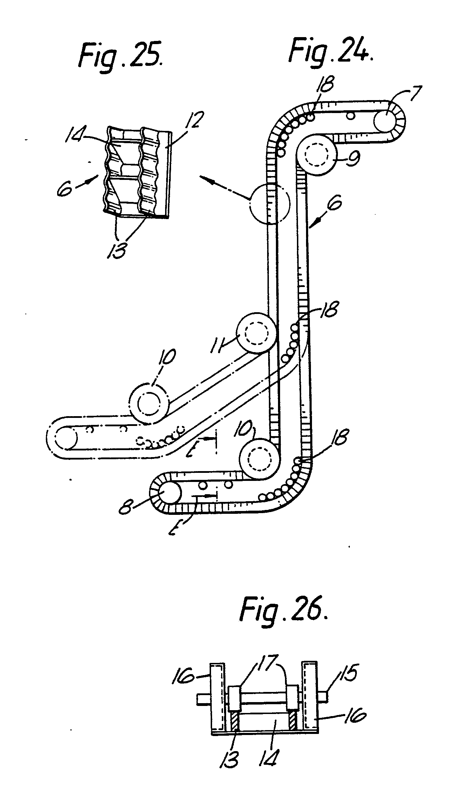

With reference to Fig. 24, the elevator includes a belt conveyor 6 within the housing. The conveyor 6 is wound between a drive pulley 7 and a return pulley 8 which are supported by the housing, and turns horizontally adjacent both ends in opposite directions at upper and lower disc rollers 9—10, which are supported by the housing.

The conveyor 6 can articulatedly turn, as shown by chain lines in Fig. 24, at a middle disc roller 11 supported by the housing between the rollers 9—10, with the lower portion of the conveyor 6 kept horizontally extending by the hydraulic jack 5 (Fig. 22).

As shown in Fig. 25, the conveyor 6 has a base belt 12, a pair of laterally spaced corrugated belts 13 fixed at one edge perpendicularly to the outer surface of the base 12 and extending along it, and a number of longitudinally spaced cross plates 14 fixed at one end to the base 12 and extending laterally between the corrugated belts 13.

Thus, the base 12, the corrugated belts 13 and the cross plates 14 form a number of box-like troughs. The corrugated belts 13 enable the conveyor 6 to flexibly turn in a plane generally parallel to them.

As shown in Fig. 26, each disc roller 9—11 has a horizontal shaft 15 journalled on the elevator housing. The shaft 15 supports a pair of spaced outer discs 16 in rolling engagement with the outer surface of both side margins of the base belt 12. The shaft 15 also supports a pair of spaced inner discs 17, which have a smaller diameter than the outer discs 16, in rolling engagement with the outer edges of the corrugated belts 13.

As shown in Fig. 24, the outer portions of the conveyor 6 around the disc rollers 9—11 are tensed by carrier rollers 18 in engagement with the inner surface of the base belt 12.

The articulated elevator 1 allows for a wider reach of the rake and screw means 20—21 in a ship.

## Claims

1. An unloader including:
    screw type excavating and conveying means (27) having an axis extending laterally;
    rake type excavating and conveying means (26) connected at one end to said screw type means, and extending perpendicularly to said axis;
    elevating means (19) extending at least in part substantially vertically to pivotably support said rake type means adjacent the lower end of said elevating means, and elevate material from said rake type means; and
    support means supporting said elevating means and adapted to rotate it on its vertical axis together with said rake type and screw type means, and move it substantially vertically and horizontally;
    said unloader being characterized by:
    rotary cutters (73, 74) provided on said screw type means at both ends of said screw type means; and
    holding means (36) connected to resiliently hold said rake type means with respect to said elevating means at a substantially constant angle to said axis of the elevating means.

2. An unloader according to Claim 1, and further characterised by guide means supported at one end pivotably by said elevating means on an axis in parallel to said axis of the screw type means, said guide means telescopically supporting said rake type means, and buffer means connected between said guide means and said rake type means.

3. An unloader according to Claim 2, and further characterized by support means connected between said elevating means and said guide means so that said axis of the screw type means may be angularly displaced in a plane in parallel to said axes of said screw type means and said elevating means.

4. An unloader according to Claim 1, 2 or 3, wherein said support means for said elevating means comprises girder means adapted to be moved horizontally and perpendicularly to its length, trolley means mounted on said girder means and adapted to be moved along it, and lift means mounted on said trolley means and adapted to be rotated on it, said lift means supporting said elevating means so as to rotate it also, and said lift means being adapted to raise and lower said elevating means substantially vertically relatively to itself.

5. An unloader according to any preceding Claim, in which the elevator means is articulated in a manner to enable the lower part to be shifted laterally with respect to the upper part.

6. An unloader according to Claim 5, wherein there are two points of articulation of the elevator means at two different heights and, control means are provided to maintain the lower end portion of the elevator means beyond the lower point of articulation parallel to itself as the lower portion is shifted laterally.

7. An unloader according to Claim 6, wherein the lower end portion of the elevator means beyond the lower articulation point is maintained substantially horizontal, and the screw type means and the rake type means are associated with it so that they also move parallel to themselves when the lower portion of the elevator means is shifted laterally.

8. An unloader according to Claim 6, or Claim 7, wherein the control means are hydraulic jacks.

**Patentansprüche**

1. Entladeeinrichtung bestehend aus:
Schraubenartigen Aushub- und Fördermitteln (27) mit einer sich längs erstreckenden Achse;
rechenartigen Aushub- und Fördermitteln (26), die mit einem Ende der schraubenartigen Mittel verbunden sind und die sich senkrecht zu dieser Achse erstrecken;
Hebemitteln (19), die sich wenigstens zum Teil vertikal erstrecken, um schwenkbar die rechenartigen Mittel benachbart zum unteren Ende der Hebemittel zu halten und um Material von den rechenartigen Mitteln anzuheben und Mitteln zum Tragen der Hebemittel und zum Drehen dieser auf der vertikalen Achse zusammen mit den rechenartigen und den schraubenartigen Mitteln und zum Bewegen dieser im wesentlichen vertikal und horizontal,
dadurch gekennzeichnet,
daß an den schraubenartigen Mitteln und zwar an beiden Seiten dieser Drehschneidwerkzeuge (73, 74) vorgesehen sind und das Haltemittel (36) vorhanden sind, die die rechenartigen Mittel nachgiebig in Bezug auf die Hebemittel in einem im wesentlichen konstanten Winkel zur Achse der Hebemittel halten.

2. Entladeeinrichtung nach Anspruch 1, dadurch gekennzeichnet, daß Führungsmittel an einem Ende vorgesehen sind die durch die Hebemittel gehalten und um eine Achse parallel zu der Achse der schraubenartigen Mittel schwenkbar sind, daß die Führungsmittel die rechenartigen Mittel teleskopierend halten und daß Puffermittel zwischen den Führungsmitteln und den rechenartigen Mitteln vorgesehen sind.

3. Entladeeinrichtung nach Anspruch 2, dadurch gekennzeichnet, daß Haltemittel zwischen den Hebemitteln und den Führungsmitteln vorgesehen sind, so daß die Achse der schraubenartigen Mittel winklig in einer Ebene verlagerbar ist, die parallel zu der Achse der schraubenartigen Mittel und der Hebemittel ist.

4. Entladeeinrichtung nach den Ansprüchen 1, 2 oder 3, wobei die Haltemittel für die Hebemittel Träger aufweisen, die horizontal und senkrecht zu ihrer Länge bewegbar sind, daß auf den Trägern und entlang dieser bewegbare Fördermittel vorgesehen sind, daß auf den Fördermitteln Hubmittel angeordnet sind, die auf diesen drehbar sind, wobei die Hubmittel die Hebemittel so halten, daß diese auch sich drehen können und daß die Hubmittel so ausgebildet sind, daß sie die Hebemittel im wesentlichen senkrecht relativ zu diesen heben und senken können.

5. Entladeeinrichtung nach einem der vorstehenden Ansprüche, wobei die Hebemittel so angelenkt sind, daß der untere Teil in Bezug zu dem oberen Teil längs verschiebbar ist.

6. Entladeeinrichtung nach Anspruch 5, wobei zwei Gelenkpunkte für die Hebemittel in zwei unterschiedlichen Höhen und Steuermittel vorgesehen sind, um den unteren Abschnitt der Hebemittel unter dem unteren Gelenkpunkt parallel zu diesem zu halten, wenn der untere Teil längs verschoben wird.

7. Entladeeinrichtung nach Anspruch 6, wobei das untere Ende der Hebemittel unterhalb des unteren Gelenkpunktes im wesentlichen horizontal gehalten wird und wobei die schraubenartigen und die rechenartigen Mittel damit so verbunden sind, daß sie sich auch parallel zu sich selbst bewegen wenn der untere Teil der Hebemittel längs verschoben wird.

8. Entladeeinrichtung nach Anspruch 6 oder 7, wobei die Steuermittel hydraulische Arbeitszylinder sind.

**Revendications**

1. Déchargeur comprenant:
— des moyens d'excavation et de transport (27) du type à vis ayant un axe s'étendant latéralement;
— des moyens d'excavation et de transport (26) du type à râteaux reliés à une extrémité auxdits moyens du type à vis, et s'étendant perpendiculairement audit axe;
— un moyen élévateur (19) s'étendant au moins en partie sensiblement verticalement pour supporter de manière pivotante lesdits moyens du type à râteaux au voisinage de l'extrémité inférieure dudit moyen elevateur, et pour élever de la matière à partir desdits moyens du type à râteaux; et
— des moyens de support supportant ledit moyen élévateur et adaptés pour le faire tourner sur son axe vertical, ensemble avec lesdits moyens du type à râteaux et du type à vis, et pour le mouvoir sensiblement verticalement et horizontalement;
ledit déchargeur étant caractérisé par:
— des couteaux rotatifs (73, 74) prévus sur lesdits moyens du type à vis, aux deux extrémités desdits moyens du type à vis; et
— des moyens de retenue (36) reliés de manière à retenir élastiquement lesdits moyens du type à râteaux, par rapport audit moyen élévateur, à un angle pratiquement constant par rapport audit axe du moyen élévateur.

2. Déchargeur selon la revendication 1, caractérisé en outre par des moyens de guidage supportés à une extrémité de manière pivotante par ledit moyen élévateur sur un axe en parallèle avec ledit axe des moyens du type à vis, lesdits moyens de guidage supportant de manière télescopique lesdits moyens du type à râteaux, et un moyen amortisseur relié entre lesdits moyens de guidage et lesdits moyens du type à râteaux.

3. Déchargeur selon la revendication 2, et caractérisé en outre par un moyen de support relié entre ledit moyen élévateur et lesdits moyens de guidage, de telle sorte que ledit axe des moyens du type à vis puisse être déplacé angulairement dans un plan en parallèle avec desdits axes desdits moyens du type à vis et dudit moyen élévateur.

4. Déchargeur selon la revendication 1, 2 ou 3, dans lequel ledit moyen de support pour ledit moyen élévateur comprend un moyen en forme de poutre adapté pour être mû horizontalement et perpendiculairement à sa longuer, un moyen en forme de chariot monté sur ledit moyen en forme de poutre et adapté pour être mû le long de celui-ci, et un moyen de levage monté sur ledit moyen en forme de chariot et adapté pour être entrainé en rotation sur celui-ci, ledit moyen de levage supportant ledit moyen élévateur de manière à le faire tourner aussi; et ledit moyen de levage étant adapté pour lever et abaisser ledit moyen élévateur dans un sens sensiblement vertical par rapport à lui-même.

5. Déchargeur selon l'une quelconque des revendications précédentes, dans lequel le moyen élévateur est articulé de manière à permettre de décaler la partie inférieure latéralement, par rapport à la partie supérieure.

6. Déchargeur selon la revendication 5, dans lequel il y a deux points d'articulation du moyen élévateur à deux hauteurs différentes, des moyens de commande étant prévus pour maintenir la partie terminale inférieure du moyen élévateur, au delà du point inférieur d'articulation, parallèle à elle-même tandis que la partie inférieure est décalée latéralement.

7. Déchargeur selon la revendication 6, dans lequel la partie terminale inférieure du moyen élévateur, au delà du point d'articulation inférieur, est maintenue sensiblement horizontale, les moyens du type à vis et les moyens du type à râteaux étant associés à elle de telle sorte qu'eux aussi se déplacent parallèlement à eux-mêmes quand la partie inférieure du moyen élévateur est décalée latéralement.

8. Déchargeur selon la revendication 6 ou 7, dans lequel les moyens de commande sont des vérins hydrauliques.

*Fig .1.*

EP 0 209 212 B1

Fig .2.

EP 0 209 212 B1

## Fig.3.

Fig. 4.

# Fig. 5.

Fig.6.

Fig.7.

Fig .8.

# Fig.9.

# Fig.10.

# Fig .11.

# Fig .12.

Fig .13.

Fig. 14.

Fig .15.

Fig .16.

Fig .17.

14

Fig .18.

29

18

31

58

58

19

61

59

Fig .19.

59

61

45

61

Fig. 20.

Fig. 21.

Fig.22.

Fig.23.

Fig.25.

Fig.24.

Fig.26.